# EUROPEAN PATENT SPECIFICATION

(11) **EP 2 213 544 B1**
(45) Date of publication and mention of the grant of the patent: **20.03.2013**
(21) Application number: 09380017.5
(22) Date of filing: 03.02.2009
(51) Int. Cl.: B61D 17/02

(54) **Trains with frontals trumpet shaped and aerodynamically connected heads**
Schienenfahrzeuge mit trompetenförmigen und aerodynamisch verbundenen Kopfende
Véhicules ferroviaires dotés de têtes en forme de trompette et accrochés de manière aérodynamique

(43) Date of publication of application: 04.08.2010
(73) Proprietor: Romo Urroz, Eduardo, 28002 Madrid (ES)
(72) Inventor: Romo Urroz, Eduardo, 28002 Madrid (ES)
(74) Representative: Manzano Cantos, Gregorio

(56) References cited:
- DE-A1- 3 936 645
- JP-A- 2007 137 296
- UA-A- 65 173

## Description

The invention relates to railway vehicles. Specifically, it attempts to find a better solution to the problems resulting from air resistance to the forward motion of railway vehicles.

The current technique is to resolve the problems deriving from high air resistance to forward motion by basically seeking to move the air mass aside with the least amount of force possible. This is done by streamlining the front and rear of the vehicles, using such methods as reducing the relevant aerodynamic coefficients as much as possible.

The background documents related to the purpose of the invention can be mentioned in the prior art, with its specific functions and features, and we must consider the patent UA 65 173 A (KHARKIV TERRITORY PRODUCTION A [UA]) 2004-03-15, which relates to a device, preferably for trains, which is mounted on the front of this train, which has a chamfer socket, which its end part is connected with a tube located along the train, so that this is not physically continuous, there is a space between the device and the front of the train where turbulence will inevitably be generated and this is undesirable for the proper aerodynamic behavior of the vehicle; whereas in this application the device or element is made in the train itself, the front part has no gap or lack of physical continuity of any kind, which makes it impossible for the aforementioned turbulence to form, it has an element with funnel shape, not with chamfer socket form, and this train whose shape is trumpet shaped has been specifically designed to optimize its aerodynamic behavior, essentially is characterized by a concave front surface in which channels, the air it encounters as it moves forward into the interior. This air runs through a channel installed for this purpose along the length of the train, and is returned to the outside at the opposite end, which has an identical configuration. Furthermore, it can be cited the patents DE 3936645 Al (SCHUELER ERICH [DE]) 1990-05-31 and JP 2007 137296 A (NIPPON SHARYO SEIZO KK) 2007-06-07, in which the front of the train has the same shape, but they have another kind of aerodynamic devices.

One of the phenomena which produce resistance to the forward motion of railway vehicles is the need to displace the air mass which the front of the vehicle encounters. This aerodynamic effect opposing the forward motion of the train increases with speed. In addition to the increased energy consumption intrinsic to the need to overcome the turbulence associated with displacing air masses, the phenomenon entails other negative phenomena, such as unwanted sound emissions, noise, which also increase with the speed at which the train travels.

In order to avoid the unwanted consequences deriving from outward displacement of the air mass in front of trains with current designs, a new aerodynamic conception is proposed for railway vehicles. It consist of a train according to claim 1.

The solution is based on the principle of preventing displacement of the air mass. When the train starts, the air encountered at the front is collected by the trumpet shaped concave front, instead of being pushed outwards from the train. At the inside edge (of the funnel), the air undergoes a compression process and travels along a channel running the length of the train to the end of the vehicle, which has an identical configuration to the front. Here, the air is decompressed through the trumpet shaped area in an inverse process, recovering the atmospheric pressure and its original volume as it moves outward.

The main idea on which the present invention is based consists of keeping the air mass which the train encounters in its original position, without displacing it with regard to an absolute reference system. The air is only compressed. It then runs through a channel, and is decompressed at the back end of the train and returned to decompressed at the back end of the train and returned to the outside environment. Through this process, it maintains the same state and position as before the passing of the vehicle. To put it another way, it consist of compressing the air mass which the train encounters as it moves forward without displacing it. The train flows around the air - within the channel in which it is compressed - and recovers its initial atmospheric position once the train has moved past it.

As this procedure avoids the need to move the air mass aside, it eliminates or significantly reduces resistance to the forward motion of the train at the front end, as well as the unwanted and difficult to calculate absorption phenomena which movement of the air mass causes at the rear end of railway vehicles in motion. Taking into account that this resistance increases enormously with speed, empirically with the square of the speed, the invention described provides a significant fuel savings, together with the possibility of achieving higher speeds with similar motorization to conventional vehicles. It will also significantly reduce the noise which accompanies the phenomenon of air masses slipping around the vehicle in motion. This makes the ride more comfortable for passengers and makes it possible to produce less environmental noise pollution along the entire route of the railway vehicle.

The invention will now be described by means of an example, with reference to the attached drawings, of which:

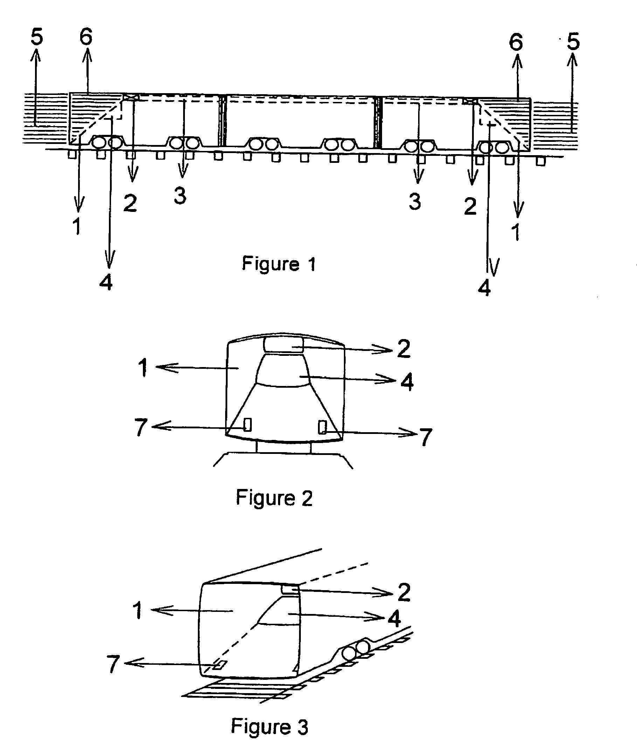

Figure 1 shows a train with a trumpet shaped front, aerodynamically connected by means of an aerodynamic channel with compressors, hooked up to the refrigeration elements of the railway vehicle itself. The key elements indicated on this figure are: number 1, front of the vehicle with its with its funnel shape element; number 2, compressor; number 3, interior channel running the length of the train; and number 4, cab. Also in figure 1, number 5 shows the outside air mass and number 6, the air mass inside the trumpet shaped front of the train which is the present invention. These air masses are represented by different thicknesses of line in order to sufficiently underline that there is no displacement of the air mass, as this remains in its initial position, accommodating the passing of the train by reducing its vo lume to the extent necessary to occupy the space determined by the position of the vehicle with regard to the mass. This reduction in volume, carried out by the compressor, would if necessary be facilitated by controlling the temperature of the air mass which the train moves though. The vehicle's own refrigeration elements can be used for this purpose. This will make it possible to keep the air pressure in the aerodynamic channel within the project's safety margins.
Figure 2 shows the front (or rear, as they are symmetrical) of the vehicle, with number 7 indicating the train headlights. Figure 3 shows a side view of the same.

## Claims

1. Train having symmetrical front and rear ends (1), the front and rear ends (1) being trumpet shaped and concave, the train being **characterized in that** the front and rear ends (1) are connected to each other along the train by an internal aerodynamic channel (3) integrated to the intermediate coaches of the train, wherein the air (6) entering the front end (1) of the train undergoes a compression process, by means of a compressor (2) and a refrigeration system of the train, and travels along the channel (3) to the rear end (1) of the train, where the air is decompressed through the trumpet shaped rear end (1) in an inverse process.

2. Train according to claim 1, **characterized in that** the train is a high-speed train.

3. Train according to claim 1, **characterized in that** the train is a magnetic levitation train.

## Patentansprüche

1. Bahn, welche symmetrische vordere und hintere Enden (1) aufweist, wobei das vordere und das hintere Ende (1) trompetenförmig und konkav sind, wobei die Bahn **dadurch gekennzeichnet ist, dass** das vordere und das hintere Ende (1) entlang der Bahn durch einen inneren aerodynamischen Kanal (3) miteinander verbunden sind, in den mittleren Wagen der Bahn integriert, wobei die Luft (6) die in das vordere Ende (1) der Bahn eintritt, einem Verdichtungsvorgang mittels einem Verdichter (2) und einem Kältesystem der Bahn unterworfen wird, und sich entlang des Kanals (3) zum hinteren Ende (1) der Bahn bewegt, wobei die Luft durch das trompetenförmige hintere Ende (1) in einem entgegengesetzten Vorgang entspannt wird.

2. Bahn nach Anspruch 1, **dadurch gekennzeichnet, dass** die Bahn ein Hochgeschwindigkeitszug ist.

3. Bahn nach Anspruch 1, **dadurch gekennzeichnet, dass** die Bahn eine Magnetschwebebahn ist.

## Revendications

1. Train ayant des extrémités avant et arrière symétriques (1), les extrémité avant et arrière (1) étant sous forme de trompète et concaves, le train étant **caractérisé en ce que** les extrémités avant et arrière (1) sont reliées entre elles le long du train par un canal aérodynamique interne (3), intégré aux wagons intermédiaires du train dans lequel l'air (6) qui pénètre par l'extrémité avant (1) du train subit un procédé de compression, par le biais d'un compresseur (2) et un système de réfrigération du train, et se déplace le long du canal (3) jusqu'à l'extrémité arrière (1) du train, où l'air est décomprimé à travers l'extrémité arrière (1) sous forme de trompète dans un procédé inverse.

2. Train selon la revendication 1, **caractérisé en ce que** le train est un train à grande vitesse.

3. Train selon la revendication 1, **caractérisé en ce que** le train es un train à lévitation magnétique.
